(19) Europäisches Patentamt
European Patent Office
Office européen des brevets

(11) Veröffentlichungsnummer: **0 009 620**
**B1**

# (12) EUROPÄISCHE PATENTSCHRIFT

(45) Veröffentlichungstag der Patentschrift: **05.08.81**

(51) Int. Cl.³: **A 01 N 57/20** // (A01N57/20, 39/02, 39/04, 43/70, 47/30)

(21) Anmeldenummer: **79103188.3**

(22) Anmeldetag: **29.08.79**

## (54) Herbizide Mittel sowie deren Verwendung zur Unkrautbekämpfung.

(30) Priorität: **08.09.78 DE 2839087**

(43) Veröffentlichungstag der Anmeldung: **16.04.80 Patentblatt 80/8**

(45) Bekanntmachung des Hinweises auf die Patenterteilung: **05.08.81 Patentblatt 81/31**

(84) Benannte Vertragsstaaten: **AT BE CH DE FR GB IT NL**

(56) Entgegenhaltungen: **GB-A-2 011 416**

(73) Patentinhaber: **HOECHST AKTIENGESELLSCHAFT, Zentrale Patentabteilung Postfach 80 03 20, D-6230 Frankfurt/Main 80 (DE)**

(72) Erfinder: **Bieringer, Hermann, Dr., Eichenweg 26, D-6239 Eppstein/Taunus (DE)**
Erfinder: **Schwerdtle, Friedhelm, Dr., Bergstrasse 17, D-6239 Eppstein/Taunus (DE)**

EP 0 009 620 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Herbizide Mittel sowie deren Verwendung zur Unkrautbekämpfung

Vorliegende Erfindung bezieht sich auf die Kombination herbizider Wirkstoffe aus der Gruppe der Phosphinotricine mit Wirkstoffen aus der Gruppe der Phenoxyalkancarbonsäuren sowie der Phenylharnstoff- und Triazinderivate.

In neuerer Zeit gewinnen Kombinationen aus verschiedenen Pestiziden zunehmend an Interesse, da sich dadurch - insbesondere im Falle synergistischer Kombinationen - wertvolle pestizide Mittel für die Praxis ergeben können, die in relativ geringer Dosierung speziell erwünschte Wirkungseigenschaften besitzen, z.B. Selektivität oder Breitbandwirkung, schnelle oder Dauer-Wirkung u.a.m.

Von Wuchsstoffherbiziden aus der Gruppe der Phenoxyalkancarbonsäuren (Verbindungen vom Typ B, s. unten) ist bekannt, dass sie vor allem breitblättrige Unkräuter gut bekämpfen, während sie gegen grasartige Unkräuter nur unzureichend wirksam sind. Aus diesem Grunde eignen sich solche Verbindungen u.a. vor allem zum Einsatz in Gras-Kulturen wie Getreide und Reis.

Von Harnstoffderivaten (Verbindungen vom Typ C, s. unten) und Triazinderivaten (Verbindungen vom Typ D, s. unten) ist bekannt, dass sie vor allem gegen keimende und auflaufende Unkräuter dikotyler Art und in sehr beschränktem Umfang auch monokotyler Art wirksam sind, aber gegen bereits aufgelaufene und weiterentwickelte Pflanzen kaum noch oder nur noch mit sehr hoher Dosierung eingesetzt werden können, da diese Substanzen nur unzureichend von Blättern aufgenommen werden und demzufolge nicht an den Wirkungsort in der Pflanze gelangen können [vgl. W. Koch und K. Hurle, Grundlagen der Unkrautbekämpfung, Verlag Eugen Ulmer, Stuttgart 1977].

Die in jüngster Zeit neu aufgefundenen Herbizide aus der Gruppe der Phosphinotricine (Verbindungen vom Typ A, s. unten) verfügen hingegen über ausgesprochen gute Blattaufnahme und Kontaktwirkung und bekämpfen Unkräuter aller botanischer Gruppierungen. Sie eignen sich deshalb besonders zur nichtselektiven Bekämpfung von unerwünschtem Pflanzenwuchs auf landwirtschaftlichen Kulturflächen, Industrieanlagen usf. [vgl. DE-OS 27 17 440].

Überraschenderweise wurde nun gefunden, dass Mischungen aus o.g. Verbindungen ausgesprochen synergistische Eigenschaften hinsichtlich der herbiziden Wirkung gegen Unkräuter haben. Solche Wirkungssteigerungen erlauben es, die Einsatzmengen der einzelnen Herbizide erheblich zu reduzieren. Es wurden auch Wirkungsvorteile spezieller Art gefunden, dass entweder die Dauerwirkung der Kombination verbessert wird oder eine Beschleunigung der Wirkungsgeschwindigkeit zu beobachten ist.

Gegenstand der vorliegenden Erfindung sind somit herbizide Mittel, die gekennzeichnet sind durch einen Gehalt an einer Kombination von

A) Phosphinotricine der Formel

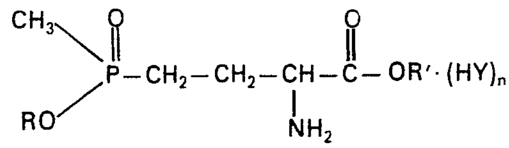

[s. DE—OS 27 17 440

wobei im Falle
A I: R = H; R' = H; n = O
A II: R = H; R' = H; Y = Cl; n = 1
A III: R = H; R' = ($C_1$-$C_4$)-Alkyl; n = O
A IV: R = $NH_4$; R' = H; n = O
A V: R = Na, K; R' = H, Na, K; n = O
bedeuten, mit

B) einem Wuchsstoffherbizid aus der Gruppe der Phenoxialkancarbonsäuren der Formel

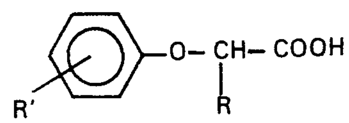

mit der Bedeutung im Falle
B I (R = H, R' = 2,4 Dichlor):
2,4-Dichlorphenoxiessigsäure [s. Contr. Boyce Thompson
Inst. Pl. Res. 12, 321 (1942)]
B II (R = H, R' = 2,4,5-Trichlor):
2,4,5-Trichlorphenoxiessigsäure = Butoxon
[s. Science, 100, 154 (1944)]
B III (R = H, R' = 2-Methyl-4-chlor):
2-Methyl-4-chlorphenoxiessigsäure = Metaxon
[s. Nature, 155, 498 (1945)]
B IV (R = $CH_3$, R' = 2-Methyl-4-chlor):
2-[2-Methyl-4-chlorphenoxi]-propionsäure = Mecoprop
[s. Ann. appl. Biol., 40, 232 (1953)]
B V (R = $CH_3$, R' = 2,4-Dichlor):
2-[2,4-Dichlorphenoxi]-propionsäure = Dichlorprop
[s. Proc. Am. Soc. hort. Sci. 45, 353 (1944)].
und/oder

C) einem Phenylharnstoffderivat der Formel

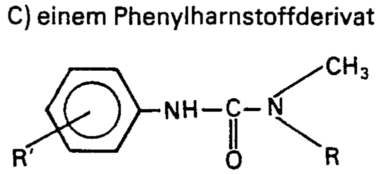

mit der Bedeutung im Falle
C I (R = $CH_3$, R' = 4-Chlor):
N-(4-Chlorphenyl)-N', N'-dimethylharnstoff = Monuron
[s. Science, 114, 493 (1951)]
C II (R = $CH_3$, R' = 3,4-Dichlor):
N-(3,4-Dichlorphenyl)-N'-N'-dimethylharnstoff = Diuron
[s. Science, 114, 493 (1951)]
C III (R = $OCH_3$, R' = 4-Chlor):
N-(4-Chlorphenyl)-N'-methoxy-N'-methylharnstoff = Monolinuron [s. Meded. Landb. Hoogesch. Opzoek Stns. Gent, 27, 1275 (1962)]

C IV ($R = OCH_3$, $R' = 3,4$-Dichlor):
N-(3,4-Dichlorphenyl)-N'-methoxy-N'-methylharnstoff = Linuron [s. Meded. Landb. Hoogesch., Gent, 27, 1275 (1962)],
und/oder
D) einem s-Triazinderivat der Formel

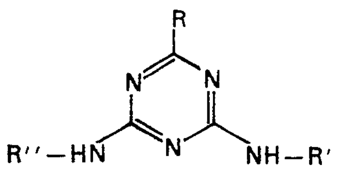

mit der Bedeutung im Falle
D I ($R = Cl$, $R' = i\text{-}C_3H_7$, $R'' = C_2H_5$):
4-Äthylamino-2-chlor-6-isopropylamino-s-triazin = Atrazin [s. Proc. IV Int. Congr. Crop. Prot. Hamburg 1957]
D II ($R = Cl$; $R' = C_2H_5$; $R'' = C_2H_5$):
4,6-Diäthylamino-2-chlor-s-triazin = Simazin [s. Experientia 12, 146 (1956)]
D III ($R = Cl$; $R' = C_2H_5$; $R'' = t\text{-}C_4H_9$):
4-Äthylamino-6-t.-butylamino-2-chlor-s-triazin-Terbuthylazin [s. Proc. 8th Br. Weed Contr. Conf. 1966, S. 485]
D IV ($R = SCH_3$; $R' = C_2H_5$; $R'' = i\text{-}C_3H_7$):
4-Äthylamino-6-isopropylamino-2-methylthio-s-triazin = Ametryn [Adv. Pest. Control Res., 3, 289 (1960)]
D V ($R = SCH_3$; $R' = i\text{-}C_3H_7$; $R'' = i\text{-}C_3H_7$):
4,6-Di-isopropylamino-2-methylthio-s-triazin = Prometryn [Chemy. Ind. 1393 (1962)]
D VI ($R = OCH_3$; $R' = C_2H_5$; $R'' = t\text{-}C_4H_9$):
4-Äthylamino-6-t.-butylamino-2-methoxy-s-triazin = Terbumeton [Proc. 8th Br. Week Control Conf. 1966, S. 485]

Die Mischungsverhältnisse der Kombinationskomponenten vom Typ A zu Typ B, C bzw. D können innerhalb weiter Grenzen schwanken zwischen etwa 4:1 bis 1:30. Die Wahl des Mischungsverhältnisses ist abhängig von der Art der Mischungspartner, Entwicklungsstadium der Unkräuter, Unkrautspektrum usf. Vorzugsweise werden Mischungsverhältnisse von 2:1 bis 1:10 gewählt.

Als Wirkstoffkombinationen kommen bevorzugt solche aus Typ A mit den Typen B, C oder D in Frage, es sind aber auch solche aus Typ A und den Typen B + C, B + D, C + D oder B + C + D verwendbar.

Die erfindungsgemässen Mischungen können sowohl als Mischformulierungen der Komponenten - z.B. benetzbare Pulver, Emulsionskonzentrate - vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Aufwandmenge des Herbizids vom Typ A in den Wirkstoffmischungen liegen im allgemeinen zwischen 0,5 und 3,0 kg/ha, die Aufwandmengen von B,C, bzw. D zwischen 0,25 und 10,0 kg/ha, d.h. die Gesamtmenge an aufzuwendender Wirkstoffkombination beträgt etwa 0,75 bis 13 kg/ha.

Die erfindungsgemässen Mittel können in den üblichen, dem Fachmann geläufigen Zubereitungen, z.B. als benetzbare Pulver, emulgierbare Konzentrate oder versprühbare Lösungen, in den Handel gebracht werden. Die formulierten Mittel enthalten dabei die erfindungsgemässen Wirkstoffkombinationen im allgemeinen zu 2 bis 95 Gew.-%.

Benetzbare Pulver sind in Wasser gleichmässig dispergierbare Präparate, die neben den Wirkstoffen ausser einem Verdünnungs- oder Inertstoff noch Netzmittel, z.B. polyoxäthylierte Alkylphenole, polyoxäthylierte Oleyl- oder Stearylamine, Alkyl- oder Alkylphenyl-sulfonate und Dispergiermittel, z.B. ligninsulfonsaures Natrium, dinaphthylmethandisulfonsaures Natrium oder auch oleoylmethyltaurinsaures Natrium enthalten.

Emulgierbare Konzentrate werden durch Auflösen des Wirkstoffgemisches in einem organischen Lösungsmittel, z.B. Butanol, Cyclohexanon, Dimethylformamid, Xylol oder auch höhersiedenden Aromate und Zusatz eines Emulgators, beispielsweise eines polyoxäthylierten Alkylphenols oder eines polyoxäthylierten Oleyl- oder Stearylamins, erhalten.

Bei herbiziden Mitteln können die Konzentrationen der Wirkstoffe in den handelsüblichen Formulierungen verschieden sein. In benetzbaren Pulvern variiert die Wirkstoffkonzentration z.B. zwischen etwa 10% und 95%, der Rest besteht aus den oben angegebenen Formulierungszusätzen. Bei emulgierbaren Konzentraten ist die Wirkstoffkonzentration etwa 10% bis 80%. Staubförmige Formulierungen enthalten meistens 5% bis 20% an Wirkstoff, versprühbare Lösungen etwa 2% bis 20%. Bei Granulaten hängt der Wirkstoffgehalt z.T. davon ab, in welcher Form (flüssig oder fest) die Wirkstoffe vorliegen und welche Granulierhilfsmittel, Füllstoffe usw. verwendet werden. Zur Anwendung werden die handelsüblichen Konzentrate gegebenenfalls in üblicher Weise verdünnt, z.B. bei benetzbaren Pulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt. Mit den äusseren Bedingungen wie Temperatur, Feuchtigkeit u.a. variiert die erforderliche Aufwandmenge.

Die erfindungsgemässen Mittel können mit anderen Herbiziden, Fungiziden und Insektiziden weiter kombiniert werden. Die Erfindung wird durch die nachfolgenden Beispiele erläutert.

Formulierungsbeispiele

1. Verbindung A IV + Verbindung C II (Spritzpulver)

| Zusammensetzung A IV : C II (in Gew.-%) | 1:5 | 1:3 | 1:8 |
|---|---|---|---|
| A IV | 8 | 12 | 6 |
| C II | 40 | 36 | 48 |
| synthetische Kieselsäure | 37,5 | 38,5 | 31,5 |
| dinaphthylmethandisulfonsaures Natrium | 8 | 8 | 8 |
| alkylnaphthalinsulfonsaures Natrium | 6 | 5 | 6 |
| Natrium-stearat | 0,5 | 0,5 | 0,5 |
| | 100 | 100 | 100 |

2. Verbindung A IV + Verbindung C IV (Spritzpulver)

| Zusammensetzung A IV + C IV (in Gew.-%) | 1:5 | 1:3 |
|---|---|---|
| A IV | 8 | 12 |
| C IV | 40 | 36 |
| ligninsulfonsaures Natrium | 10 | 10 |
| Oleoyl-N-methyltaurid Natrium | 1 | 1,5 |
| Natrium-stearat | 0,5 | 0,5 |
| alkylnaphthalinsulfonsaures Natrium | 2 | 2,5 |
| synthetische Kieselsäure | 35,5 | 34,5 |
| Natriumbicarbonat | 3 | 3 |
| | 100 | 100 |

3. Verbindung A IV + Verbindung D I (Spritzpulver)

| Zusammensetzung A IV: DI (in Gew.-%) | 1:5 | 1:3 |
|---|---|---|
| A IV | 10 | 15 |
| D I | 50 | 45 |
| Natriumsulfat | 5 | 5 |
| dodecylbenzolsulfonsaures Natrium | 1 | 0,5 |
| Natrium-stearat | 0,5 | 0,5 |
| ligninsulfonsaures Natrium | 12 | 14 |
| Kaolin | 21,5 | 20 |
| | 100,0 | 100,0 |

4. Verbindung A IV + Verbindung D IV (Spritzpulver) zu formulieren wie unter Beispiel Nr. 3 angegeben.

5. Verbindung A IV + Verbindung B II bzw. Verbindung B IV

| Zusammensetzung (in Gew.-%) | A IV:B II = 1:2 | A IV:B IV = 1:2 |
|---|---|---|
| A IV | 20 | 20 |
| B II (Na-Salz) | 43,4 | — |
| B IV (Na-Salz) | — | 44,1 |
| Alkylnaphthalinsulfonsaures Natrium | 2 | 4 |
| dinaphthalinmethandisulfonsaures Natrium | 6 | 5 |
| Oleoyl-N-methyltaurid Natrium | 0,5 | 0,5 |
| Natriumbicarbonat | 4 | 4 |
| Diatomeenerde | 10 | 10 |
| synthetische Kieselsäure | 14,1 | 12,4 |
| | 100,0 | 100,0 |

Die Herstellung der Spritzpulver erfolgt in der Weise, dass man sämtliche Bestandteile mischt, einmal auf einer Schlagkreuzmühle und zweimal mit einer Stiftmühle feinst mahlt.

Biologische Beispiele

Beispiel I:

Mehrjährige Ungräser (Cynodon und Paspalum) wurden im Gewächshaus in Töpfen aus Rhizomen angezogen, bis die Pflanzen eine Wuchshöhe von 10 bis 15 cm erreicht hatten. Anschliessend wurden die Herbizide im Nachauflaufverfahren auf die Pflanzen gesprüht. Ca. 4 Wochen nach der Applikation wurde durch visuelle Bonitur der Bekämpfungserfolg der Produkte an den Pflanzenarten, die weiter im Gewächshaus gehalten worden waren, in % geschätzt. Hierbei zeigte sich, dass die herbizide Mischung in ihrer Wirkung weit über das hinaus ging, was auf Grund der Einzelwirkung der Mischungspartner zu erwarten gewesen wäre. Offenbar wurde somit ein bedeutender synergistischer Effekt dieser herbizidmischung gefunden, der nicht erwartet werden konnte.

Tabelle I

Bekämpfung von perennierenden Ungräsern im Nachauflaufverfahren (Bekämpfungserfolg in %) im Gewächshaus

| | Dosis kg AS/ha | Cynodon dactylon | Paspalum conjugatum |
|---|---|---|---|
| A II Lösl. 25% | 1,44 | 0 | 86 |
| | 2,88 | 40 | — |
| C II WP 80 % | 1,00 | 24 | 16 |
| A II + C II | 1,44 + 1,0 | 55 | 100 |
| | 2,88 + 1,0 | 95 | — |

Wasseraufwandmenge: 800 l/ha
Wiederholung: 4 l/ha
Boniturzeitpunkt: 4 Wochen nach Behandlung

Beispiel II:

Im Freiland wurde ein Stück Feld, auf dem verschiedene Gräserarten wachsen, für einen Kleinparzellenversuch mit den erfindungsgemässen Verbindungen ausgewählt. Dann wurden die Herbizide im Nachauflaufverfahren mit einem Wasseraufwandvolumen von 600 l/ha auf 10 $m^2$ grossen Versuchsparzellen appliziert. Es wurden jeweils 2 Wiederholungen behandelt. 27 Tage nach der Behandlung wurde der herbizide Wirkungsgrad durch visuelle Erfolgsschätzung (in %) festgehalten (Tabelle II). Hierbei zeigte sich überraschenderweise, dass die herbiziden Mischungen einen ausgesprochen synergistischen Effekt haben, indem durch diese Mischungen ein wesentlich besserer Bekämpfungserfolg (Synergismus) erzielt wird, als das auf Grund der Einzelwirkung der Komponenten zu erwarten war (additive Wirkung).

Tabelle II
Unkrautbekämpfung; Feldversuch bei Nachauflaufbehandlung (Erfolg in %); Bonitur 27 Tage nach Behandlung

| | Dosis kg AS/ha | Lolium perenne | Echinochloa crus galli | Poa annua |
|---|---|---|---|---|
| A II Lösl. 18 % | 0,75 | 33 | 49 | 49 |
| B IV | 2,0 | 0 | 0 | 0 |
| B II | 2,0 | 0 | 0 | 0 |
| A II + B IV | 0,75 + 2,0 | 90 | 85 | 88 |
| A II + B II | 0,75 + 2,0 | 97 | 90 | — |

Wasseraufwand: 600 l/ha
Parzellengrösse: 10 $m^2$
Wiederholungen: 2

Beispiel III:

Im Feld wurde auf einem Queckenbestand ein Kleinparzellenherbizidversuch angelegt und im 3-Blattstadium der Quecke (Agropyron repens) mit Herbiziden behandelt. Die Wasseraufwandmenge betrug 600 l/ha, die Parzellengrösse 10 $m^2$, es wurden 2 Wiederholungen angelegt. Zu 2 verschiedenen Terminen, nämlich 15 Tage und 58 Tage nach der Behandlung wurde der Bekämpfungserfolg der Versuchssubstanzen visuell in % festgehalten. Hierbei zeigte sich, dass die herbiziden Mischungen zum frühen Zeitpunkt der ersten Bonitur, d.h. 15 Tage nach Applikation, etwa normale herbizide Wirksamkeit hatten, wie dies aufgrund der additiven Gesamtwirkung der einzelnen Partner zu erwarten war. Später hingegen, d.h. 58 Tage nach Applikation, zeigte sich, dass nur die herbiziden Mischungen noch gute Wirksamkeit aufwiesen, während die Wirkung der Einzelpartner nicht mehr brauchbar war. Somit zeigten die Mischungen eine synergistische Wirkungssteigerung hinsichtlich der Wirkungsdauer der Queckenbekämpfung, die wirtschaftlich sehr wertvoll ist, da insbesondere die Quecke zu den grossen wirtschaftlich wichtigen Unkrautproblemen gehört und sich durch solche Herbizidmischungen eine dauerhafte Queckenbekämpfung anbietet.

Tabelle III

Bekämpfung von Quecke (Agropyron repens) im Feldversuch bei Nachauflaufbehandlung. Erfolg (in %) bei 2 verschiedenen Boniturterminen

| | Dosis kg AS/ha | Agropyron repens/ Bekämpfungserfolg in % nach Tagen 15 Tagen | 58 Tagen |
|---|---|---|---|
| A II Lösl. 18% | 1,0 | 90 | 33 |
| C II WP 80 | 3,2 | 0 | 33 |
| D I WP 50 | 3,0 | 17 | 33 |
| A II + C II | 1,0+3,2 | 87 | 85 |
| A II + D I | 1,0+3,0 | 90 | 98 |

Boniturstadium der Quecke:
Anfang Bestockung (15 Tage nach Behandlung)
Anfang Schossen (58 Tage nach Behandlung)

Wasseraufwandmenge: 600 l/ha
Parzellengrösse: 10 $m^2$
Wiederholungen: 2

**Patentansprüche**

1. Herbizide Mittel, gekennzeichnet durch einen Gehalt an der Verbindung

A) Phosphinotricine der Formel

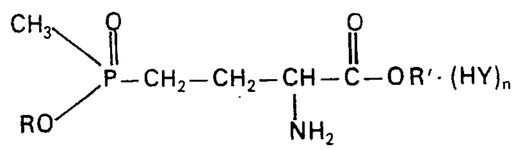

wobei im Falle
A I: R = H; R' = H; n = O
A II: R = H; R' = H; Y = Cl; n = 1
A III: R = H; R' = ($C_1$-$C_4$)-Alkyl; n = O
A IV: R = $NH_4$; R' = H; n = O
A V: R = Na, K; R' = H, Na, K; n = O
bedeuten,
in Kombination mit

B) einem Wuchsstoffherbizid aus der Gruppe der Phenoxialkancarbonsäuren der Formel

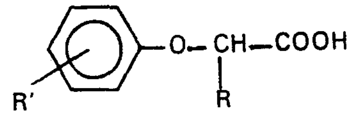

mit der Bedeutung im Falle
B I (R = H, R' = 2,4 Dichlor):
2,4-Dichlorphenoxiessigsäure,
B II (R = H, R' = 2,4,5-Trichlor):

2,4,5-Trichlorphenoxiessigsäure = Butoxon,
B III (R = H, R' = 2-Methyl-4-chlor):
2-Methyl-4-chlorphenoxiessigsäure = Metaxon,
B IV (R = $CH_3$, R' = 2-Methyl-4-chlor):
2-[2-Methyl-4-chlorphenoxi]-propionsäure = Mecoprop,
B V (R = $CH_3$, R' = 2,4-Dichlor):
2-[2,4-Dichlorphenoxi]-propionsäure = Dichlorprop,
und/oder
C) einem Phenylharnstoffderivat der Formel

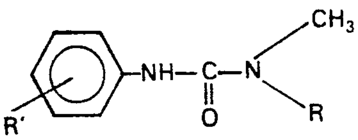

mit der Bedeutung im Falle
C I (R = $CH_3$, R' = 4-Chlor):
N-(4-Chlorphenyl)-N',N'-dimethylharnstoff = Monuron,
C II (R = $CH_3$, R' = 3,4-Dichlor):
N-(3,4-Dichlorphenyl)-N',N'-dimethylharnstoff = Diuron,
C III (R = $OCH_3$, R' = 4-Chlor):
N-(4-Chlorphenyl)-N'-methoxy-N'-methylharnstoff = Monolinuron,
C IV (R = $OCH_3$, R' = 3,4-Dichlor):
N-(3,4-Dichlorphenyl)-N'-methoxy-N'-methylharnstoff = Linuron,
und/oder
D) einem s-Triazinderivat der Formel

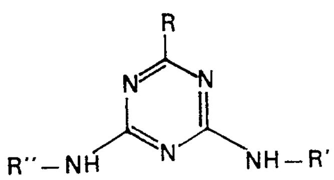

mit der Bedeutung im Falle
D I (R = Cl, R' = i-$C_3H_7$, R'' = $C_2H_5$):
4-Äthylamino-2-chlor-6-isopropylamino-s-triazin = Atrazin,
D II (R = Cl; R' = $C_2H_5$; R'' = $C_2H_5$):
4,6-Diäthylamino-2-chlor-s-triazin = Simazin,
D III (R = Cl; R' = $C_2H_5$; R'' = t-$C_4H_9$):
4-Äthylamino-6-t.-butylamino-2-chlor-s-triazin = Terbuthylazin,
D IV (R = $SCH_3$; R' = $C_2H_5$; R'' = i-$C_3H_7$):
4-Äthylamino-6-isopropylamino-2-methylthio-s-triazin = Ametryn,
D V (R = $SCH_3$; R' = i-$C_3H_7$; R'' = i-$C_3H_7$):
4,6-Di-isopropylamino-2-methylthio-s-triazin = Prometryn,
D VI (R = $OCH_3$; R' = $C_2H_5$; R'' = t-$C_4H_9$):
4-Äthylamino-6-t.-butylamino-2-methoxy-s-triazin = Terbumeton.

2. Herbizide Mittel gemäs Anspruch 1, dadurch gekennzeichnet, dass das Gewichtsverhältnis der Wirkstoffe (A) zu (B,C,D) zwischen 4:1 und 1:30 liegt.

3. Herbizide Mittel gemäss Anspruch 1, dadurch gekennzeichnet, dass das Gewichtsverhältnis der Wirkstoffe (A) zu (B,C,D) zwischen 2:1 und 1:10 liegt.

4. Herbizide Mittel, gekennzeichnet durch einen Gehalt von 2 bis 95 Gew.-% an einer Wirkstoffkombination gemäss Ansprüchen 1 bis 3 sowie üblichen Formulierungshilfsmitteln.

5. Verwendung von Wirkstoffkombinationen gemäss Ansprüchen 1 bis 4 zur Unkrautbekämpfung.

6. Verfahren zur Bekämpfung von Unkräutern, dadurch gekennzeichnet, dass man auf die von ihnen befallenen Flächen Wirkstoffkombinationen gemäss Ansprüchen 1 bis 4 in Mengen von 0,75 bis 13 kg Wirkstoffkombination pro Hektar aufbringt.

**Claims:**

1. Herbicidal compositions containing as active substance
A) phosphinotricine of the formula

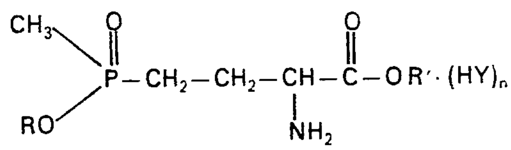

in which
A I: R denotes H, R' denotes H and n is zero
A II: R denotes H, R' denotes H, Y denotes Cl and n is 1
A III: R denotes H, R' denotes $C_1$-$C_4$ alkyl and n is zero
A IV: R denotes $NH_4$, R' denotes H and n is zero
A V: R denotes Na or K, R' denotes H, Na or K and n is zero
in combination with
B) a hormone weed killer of the group of phenoxy-alkanecarboxylic acids of the formula

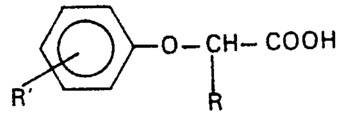

in which
B I: R denotes H and R' denotes 2,4-dichloro (2,4-dichlorophenoxyacetit acid)
B II: R denotes H and R' denotes 2,4,5-trichloro (2,4,5-trichlorophenoxyacetic acid = butoxone)
B III: R denotes H and R' denotes 2-methyl-4-chloro (2-methyl-4-chlorophenoxyacetic acid = metaxone)
B IV: R denotes $CH_3$ and R' denotes 2-methyl-4-chloro (2-(2-methyl-4-chlorophenoxy)-propionic acid = mecoprop)
B V: R denotes $CH_3$ and R' denotes 2,4-dichloro (2-(2,4-dichlorophenoxy)-propionic acid = dichloroprop),
and/or
C) a phenylurea derivate of the formula

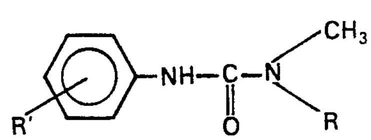

in which
C I: R denotes $CH_3$ and R' denotes 4-chloro (N-(4-chlorophenyl)-N', N'-dimethyl urea = monuron)
C II: R denotes $CH_3$ and R' denotes 3,4-dichloro (N-(3,4-dichlorophenyl)-N', N'-dimethyl urea = diuron)
C III: R denotes $CH_3$ and R' denotes 4-chloro (N-(4-chlorophenyl)-N'-methoxy-N'-methyl urea = monolinuron)
C IV: R denotes $OCH_3$ and R' denotes 3,4-dichloro (N-(3,4-dichlorophenyl)-N'-methoxy-N'-methyl ureau = Linuron)
and/or
D) a s-triazine derivative of the formula

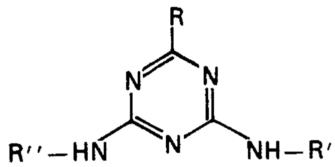

in which
D I: R denotes Cl, R' denotes i-$C_3H_7$ and R'' denotes $C_2H_5$ (4-ethylamino-2-chloro-6-isopropylamino-s-triazine = atrzine)
D II: R denotes Cl, R' denotes $C_2H_5$ and R'' denotes $C_2H_5$ (4,6-diethylamino-2-chloro-s-triazine = simazine)
D III: R denotes Cl, R' denotes $C_2H_5$ and R'' denotes t-$C_4H_9$ (4-ethylamino-6-t.butylamino-2-chloro-s-triazine = terbuthylazine)
D IV: R denotes $SCH_3$, R' denotes $C_2H_5$ and R'' denotes i-$C_3H_7$ (4-ethylamino-6-isopropylamino-2-methylthio-s-triazine = ametryne)
D V: R denotes $SCH_3$, R' denotes i-$C_3H_7$ and R'' denotes i-$C_3H_7$ (4,6-diisopropylamino-2-methylthio-s-triazine prometryne)
D VI: R denotes $OCH_3$, R' denotes $C_2H_5$ and R'' denotes t-$C_4H_9$ (4-ethylamino-6-t.butylamino-2-methoxy-s-triazine = terbumeton).

2, Herbicidal composition as claimed in claim 1, in which the proportion by weight of active component A to component (B,C,D) is in the range or from 4:1 to 1:30.

3. Herbicidal composition as claimed in claim 1, in which the proportion by weight of active component A to component (B,C,D) is in the range of from 2:1 to 1:10.

4. Herbicidal composition containing from 2 to 95% by weight of a combination of active substances as claimed in claim 1, the remainder being the usual formulation auxiliaries.

5. Method of uising a herbicidal composition as claimed in claim 1 for the control of weed.

6. Method for combating weeds, which comprises treating the infested area with a herbicidal composition as claimed in claim 1 in an amount corresponding to 0.75 to 13 kg of active combination per hectare.

## Revendications

1. Produits herbicides caractérisés en ce qu'ils contiennent:

A) une phosphinotricine répondant à la formule:

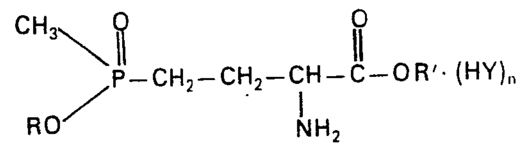

dans laquelle:
pour A I: R = H; R' = H; n = O
pour A II: R = H; R' = H; Y = Cl; n = 1
pour A III: R = H; R' = alkyle en $C_1$-$C_4$; n = O
pour A IV: R = $NH_4$; R' = H; n = O
pour A V: R = Na, K; R' = H, Na, K; n = O
associée à:
B) un herbicide de croissance appartenant au groupe des acides phénoxy-alcanoïques répondant à la formule:

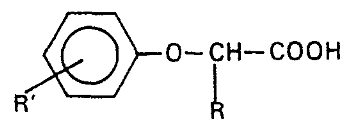

dans laquelle:
pour B I: R = H, R' = dichloro-2,4, le composé étant alors l'acide dichloro-2,4 phénoxy-acétique,
pour B II: R = H, R' = trichloro-2,4,5, le composé étant alors l'acide trichloro-2,4,5 phénoxyacétique, ou butoxon,
pour B III: R = H, R' = müthyl-2 chloro-4, le composé étant alors l'acide méthyl-2 chloro-4 phénoxy-acétique, ou métaxon,
pour B IV: R = $CH_3$, R' = méthyl-2 chloro-4, le composé étant alors l'acide (méthyl-2 chloro-4 phénoxy)-2 propionique, ou mécoprop,
pour B V: R = $CH_3$, R' = dichloro-2,4, le composé étant alors l'acide (dichloro-2,4 phénoxy) -2 propionique, ou dichlorprop,
et/ou à
C) un dérivé de la phénylurée répondant à la formule:

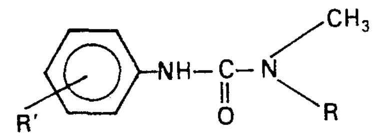

dans laquelle:
pour C I: R = $CH_3$, R' = chloro-4, le composé étant la N- (chloro-4 phényl)-N', N'-diméthyl-urée, ou monuron,
pour C II: R = $CH_3$, R' = dichloro-3,4, le composé étant la N-(dichloro-3,4 phényl)-N', N'-diméthyl-urée, ou diuron,
pour C III: R = $OCH_3$, R' = chloro-4, le composé étant la N-(chloro-4 phényl)-N'-méthoxy-N'-méthyl-urée, ou monolinuron,
pour C IV: R = $OCH_3$, R' = dichloro-3,4, le composé étant la N-(dichloro-3,4 phényl)-N'-méthoxy-N'méthyl-urée, ou linuron,
et/ou à
D) un dérivé de la s-triazine répondant à la formule:

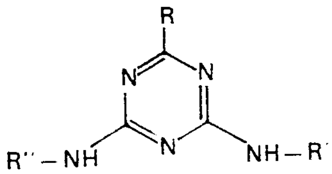

dans laquelle:

pour D I: R = Cl, R' = i-$C_3H_7$, R'' = $C_2H_5$, le composé étant l'éthylamino-4 chloro-2 isopropylamino-6 s-triazine, ou atrazine,

pour D II: R = Cl, R' = $C_2H_5$, R'' = $C_2H_5$, le composé étant la bis-(éthylamino)-4,6 chloro-2 s-triazine, ou simazine,

pour D III: R = Cl, R' = $C_2H_5$, R'' = t-$C_4H_9$, le composé étant l'éthylamino-4 tert-butylamino-6 chloro-2 s-triazine, ou terbuthylazine,

pour D IV: R = $SCH_3$, R' = $C_2H_5$, R'' = i-$C_3H_7$, le composé étant l'éthylamino-4 isopropylamino-6 méthylthio-2 s-triazine, ou amétryne,

pour D V: R = $SCH_3$, R' = i-$C_3H_7$, R'' = i-$C_3H_7$, le composé étant la bis-isopropylamino-4,6 méthylthio-2 s-triazine, ou prométryne,

pour D VI: R = $OCH_3$, R' = $C_2H_5$, R'' = t-$C_4H_9$, le composé étant l'éthylamino-4 tert-butylamino-6 méthoxy-2 s-triazine, ou terbuméton.

2. Produits herbicides selon la revendication 1, caractérisés en ce que le rapport pondéral des matières actives, en l'espèce (A) à (B,C,D), est compris entre 4:1 et 1:30.

3. Produits herbicides selon la revendication 1, caractérisés en ce que le rapport pondéral des matières actives, en l'espèce (A) à (B,C,D), est compris entre 2:1 et 1:10.

4. Produits herbicides caractérisés en ce qu'ils contiennent de 2 à 95% en poids d'une association de matières actives selon l'une quelconque des revendications 1 à 3 ainsi que des adjuvants de formulation usuels.

5. Utilisation d'associations de matières actives selon l'une quelconque des revendications 1 à 4 pour la lutte contre les plantes adventices.

6. Procédé pour combattre des plantes adventices, caractérisé en ce qu'on applique, sur les surfaces occupées par ces plantes, des associations de matières actives selon l'une quelconque des revendications 1 à 4 en des quantités de 0,75 à 13 kg de l'association de matières actives par hectare.